# EUROPÄISCHE PATENTANMELDUNG

(11) **EP 3 597 574 A1**
(43) Veröffentlichungstag der Anmeldung: **22.01.2020**
(21) Anmeldenummer: 19177810.9
(22) Anmeldetag: 03.06.2019
(51) Int. Cl.: B65G 47/86, B65G 47/90

(54) **TRANSPORTVORRICHTUNG ZUM TRANSPORTIEREN VON BEHÄLTERN**

(30) Priorität: 16.07.2018 DE 202018104075 U
(71) Anmelder: KRONES AG, 93073 Neutraubling (DE)
(72) Erfinder: Hof, Reimund, 93073 Neutraubling (DE)
(74) Vertreter: Grünecker Patent- und Rechtsanwälte PartG mbB

(57) **Zusammenfassung**

Die Erfindung stellt eine Transportvorrichtung (1) bereit zum Transportieren von Behältern (2) mit einer Mehrzahl von Pucks (3), die jeweils zum Aufnehmen und stehenden Transport eines Behälters (2) ausgebildet sind, dadurch gekennzeichnet, dass die Transportvorrichtung (1) mindestens einen Hebe-Absenk-Stern (4) umfasst, der derart ausgebildet ist, dass zum Entnehmen der Behälter (2) aus den Pucks (3) je ein Behälter (2) und der dem Behälter (2) zugeordnete Puck (3) auseinander bewegt werden, und/oder dass zum Einsetzen der Behälter (2) in die Pucks (3) je ein Behälter (2) und der dem Behälter (2) zugeordnete Puck (3) aufeinander zu bewegt werden.

## Beschreibung

Die Erfindung betrifft eine Transportvorrichtung und ein Verfahren zum Transportieren von Behältern mit einer Mehrzahl von Pucks, die jeweils zum Aufnehmen und stehenden Transport eines Behälters ausgebildet sind.

Bei der Bearbeitung von Behältern ist ein geeigneter Transport der Behälter zwischen und in entsprechenden Behandlungsmaschinen, beispielsweise Etikettierern, Direktdruckmaschinen oder Inspektionsmaschinen, von großer Bedeutung. Es muss sichergestellt werden, dass die Behälter nicht umfallen und in vielen Fällen auch, dass sie in vorgegebenen Abständen und geeigneter Ausrichtung in die Behandlungsmaschine transportiert werden.

Eine besondere Herausforderung stellen dabei Behälter dar, die eine komplexe Form aufweisen, insbesondere keine eigene Standfläche aufweisen oder eine Standfläche, die keine ausreichende Stabilisierung ermöglicht.

Es ist bekannt, sogenannte Pucks als Werkstückträger zu verwenden, um Behälter einzeln zu transportieren. Die Pucks sind austauschbare Transportelemente die jeweils einen Boden und seitliche Stützelemente, die auf dem Boden stehende Behälter seitlich stützen, aufweisen. Insbesondere kann es sich um tassenförmige Elemente mit einer Aufnahme handeln, in der ein unterer Teil der Behälter aufgenommen wird. Dabei kann ein Puck mit einer Aufnahmeform entsprechend dem aktuell zu bearbeitenden Behältertyp gewählt werden. So können die Behälter stehend transportiert werden und werden dabei durch die entsprechenden Aufnahmen bzw. seitlichen Stützelemente stabilisiert. Die Pucks können beispielsweise mittels eines Transportbands oder einer Förderkette gefördert werden, welche die Pucks entlang einer Transportstrecke mitziehen.

Bisher werden bei dieser Art des Transports die Pucks zu einer Behandlungsmaschine transportiert, die Behälter werden dort an die Behandlungsmaschine übergeben, indem sie aus den Pucks herausgehoben werden. In der Behandlungsmaschine laufen die Behälter beispielsweise auf einem Karussell. Nachdem die Behälter die Behandlungsmaschine durchlaufen haben, werden sie jeweils wieder in einen Puck gestellt.

Das Entnehmen der Behälter aus den Pucks erfolgt beispielsweise mittels eines Hebesterns, der die Behälter greift und aus dem Puck hebt. Das Einsetzen der Behälter in den Puck erfolgt, indem mittels des Hebesterns oder eines weiteren Hebesterns die Behälter abgesenkt und in den Puck eingesetzt werden. Dabei können beispielsweise Behälter-Greifelemente die Behälter halten und mittels einer Kurvenführung zusammen mit den Behältern angehoben bzw. abgesenkt werden.

Die Hubhöhe, um die die Behälter angehoben werden müssen, hängt dabei von der Höhe der Behälter ab. Wenn bei einem vorgegebenen Umfang des Hebesterns eine größere Hubhöhe erforderlich ist, führt das dazu, dass die Steigung, die die Behälter-Greifelemente durchlaufen, höher wird. Die Belastung der Kurvenführung wird dadurch ebenfalls höher. Somit ist durch die Belastbarkeitsgrenzen der Kurvenführung bei einem festen Umfang des Hebesterns der Hubhöhe eine Grenze gesetzt. Somit können dann auch bestimmte Behälterformate nicht verarbeitet werden. Für solche Behälterformate müssen dann zusätzliche entsprechend größere Hebesterne verwendet werden. Alternativ können auch mehrere hintereinander angeordnete Hebesterne verwendet werden und die nötige Höhenänderung untereinander aufteilen.

Die der Erfindung zugrundeliegende Aufgabe besteht also darin, eine Vorrichtung bereitzustellen, die eine höhere Flexibilität bezüglich des Behälterformats ermöglicht.

Die Aufgabe wird durch den Gegenstand des Anspruchs 1 gelöst.

Demnach umfasst die eingangs genannte Transportvorrichtung mindestens einen Hebe-Absenk-Stern, der derart ausgebildet ist, dass zum Entnehmen der Behälter aus den Pucks je ein Behälter und der dem Behälter zugeordnete Puck auseinander bewegt werden, und/oder dass zum Einsetzen der Behälter in die Pucks je ein Behälter und der dem Behälter zugeordnete Puck aufeinander zu bewegt werden. Der dem Behälter zugeordnete Puck ist im Falle des auseinander Bewegens der Puck, aus dem der Behälter entnommen wird. Im Falle des aufeinander zu Bewegens ist der dem Behälter zugeordnete Puck der Puck, in den der Behälter eingesetzt wird.

Das heißt, dass zum Entnehmen bzw. zum Einsetzen ein Behälter und der zugeordnete Puck in entgegengesetzte Richtungen bewegt werden, so dass ihr Abstand zum Entnehmen vergrößert wird bzw. zum Einsetzen verringert wird.

Somit kann der Gesamthub, der erforderlich ist, um einen Behälter aus dem Puck zu entnehmen oder in einen Puck einzusetzen, auf zwei gegenläufige Bewegungen aufgeteilt werden. Beispielsweise kann bei der Behälterentnahme der Gesamthub auf die Bewegung zum Anheben des Behälters und die Bewegung zum Absenken des Pucks verteilt werden. Alternativ oder zusätzlich kann beim Einsetzen der Behälter in die Pucks der Gesamthub auf die Bewegung zum Absenken des Behälters und die Bewegung zum Anheben des Pucks verteilt werden.

Die beanspruchte Transportvorrichtung hat also den Vorteil, dass, bei gleichem Umfang und gleicher durch die Behälter durchlaufener Steigung, eine größere Hubhöhe erreicht werden kann, insbesondere bis zur doppelten Hubhöhe, wenn die Pucks maximal die gleiche Steigung durchlaufen wie die Behälter. Somit können auch höhere Behälter ohne Bereitstellen größerer Hebesterne verarbeitet werden, was die Flexibilität der Vorrichtung erhöht.

Der Hebe-Absenk-Stern kann insbesondere zum Verstellen der vertikalen Position der Behälter und der Pucks ausgebildet sein. Das heißt, der Hebe-Absenk-Stern kann zur Höhenverstellung sowohl der Behälter als auch der Pucks ausgebildet sein.

Die Höhenverstellung kann insbesondere eine synchronisierte und gegenläufige Höhenverstellung sein. Das heißt, dass der Betrag der Höhenverstellung für einen Behälter und den zugehörigen Puck gleich und die Richtung der Höhenverstellung entgegengesetzt sein können.

Der Hebe-Absenk-Stern kann zum Entnehmen der Behälter aus den Pucks derart ausgebildet sein, dass er die Behälter anhebt und zugleich die Pucks absenkt. Insbesondere kann der Hebe-Absenk-Stern derart ausgebildet und angeordnet sein, dass die Behälter im Einlauf einer Behandlungsmaschine zum Behandeln der Behälter aus den Pucks entnommen werden.

Der Hebe-Absenk-Stern kann zum Einsetzen der Behälter in die Pucks derart ausgebildet sein, dass er die Behälter absenkt und zugleich die Pucks anhebt. Insbesondere kann der Hebe-Absenk-Stern derart ausgebildet und angeordnet sein, dass die Behälter im Auslauf einer bzw. der Behandlungsmaschine zum Behandeln der Behälter in die Pucks eingesetzt werden.

Der Hebe-Absenk-Stern kann Behälter-Greifelemente zum Greifen jeweils eines Behälters, eine erste Kurvenführung und eine zweite Kurvenführung umfassen. Optional kann der Hebe-Absenk-Stern auch Puck-Greifelemente umfassen.

Dabei kann die erste Kurvenführung derart ausgebildet sein, dass die Behälter-Greifelemente zum Entnehmen der Behälter aus den Pucks nach dem Greifen der Behälter angehoben werden. Außerdem kann dabei die zweite Kurvenführung derart ausgebildet sein, dass die Pucks zum Entnehmen der Behälter aus den Pucks nach dem Greifen der Behälter abgesenkt werden, insbesondere mittels Puck-Greifelementen. Die erste Kurvenführung und die zweite Kurvenführung können dann insbesondere derart ausgebildet sein, dass zum Entnehmen der Behälter aus den Pucks gleichzeitig die Behälter angehoben und die Pucks abgesenkt werden.

Alternativ oder zusätzlich kann die erste Kurvenführung derart ausgebildet sein, dass die Behälter-Greifelemente zum Einsetzen der Behälter in die Pucks nach dem Greifen der Behälter abgesenkt werden, und die zweite Kurvenführung kann derart ausgebildet sein, dass die Pucks zum Einsetzen der Behälter in die Pucks nach dem Greifen der Behälter angehoben werden, insbesondere mittels Puck-Greifelementen. Die erste Kurvenführung und die zweite Kurvenführung können dann insbesondere derart ausgebildet sein, dass zum Einsetzen der Behälter in die Pucks gleichzeitig die Behälter abgesenkt und die Pucks angehoben werden. Die Kurvenführung kann jeweils ganz oder teilweise um die Drehachse des Hebe-Absenk-Sterns verlaufen. Die Kurvenführung kann beispielsweise in einer Zylindermantelfläche verlaufen, wobei die Zylinderachse der der Drehachse des Hebe-Absenk-Sterns entspricht. Dann kann die Kurvenführung insbesondere um den gesamten Umfang oder nur um einen Teil des Umfangs des Zylinders verlaufen. Allerdings ist ein Verlauf in der Zylinderfläche nicht zwingend. Die Kurvenführung kann beispielsweise eine Nut in der Außenseite eines Zylinders und/oder eine Schiene und/oder eine Stange umfassen.

Die Behälter-Greifelemente bzw. Puck-Greifelemente können Greifwerkzeuge zum Greifen und Halten der Behälter bzw. der Pucks umfassen. Zusätzlich können die Behälter-Greifelemente bzw. die Puck-Greifelemente einen Abschnitt umfassen, der mit der Kurvenführung wechselwirkt. Insbesondere kann die Kurvenführung in Form einer Nut oder einer Schiene oder einer Stange ausgebildet sein und der Abschnitt kann einen Fortsatz umfassen, der in die Nut eingreift, oder kann derart ausgebildet und angeordnet sein, dass er auf bzw. entlang der Schiene oder Stange läuft.

Die Behälter-Greifelemente bzw. Puck-Greifelemente können alternativ oder zusätzlich einen Abschnitt aufweisen, der derart ausgebildet ist und gegebenenfalls mit anderen Teilen des Hebe-Absenk-Sterns derart wechselwirkt, dass die Behälter-Greifelemente bzw. Puck-Greifelemente im rotierenden Betrieb des Hebe-Absenk-Sterns mitgenommen werden, also um die Drehachse des Hebe-Absenk-Sterns umlaufen. Beispielsweise kann es sich hierbei um vertikal verlaufende Aussparungen in einem Greifelement handeln, die an vertikal verlaufenden Führungen, beispielsweise Stangen, derart angebracht sind, dass die Greifelemente in vertikaler Richtung entlang der Führungen bewegbar sind, wobei dazu insbesondere ein Lager vorgesehen sein kann, und dass die Greifelemente durch die Führungen mitgenommen werden, wenn diese im Betrieb um die Drehachse des Hebe-Absenk-Sterns rotieren, so dass die Greifelemente um die Drehachse umlaufen. Alternativ zu solchen Führungen sind auch einzeln ansteuerbare und beispielsweise durch Linearmotoren angetriebene Greifelemente möglich.

Die Transportvorrichtung kann in den oben beschriebenen Beispielen zusätzlich oder alternativ zu den Puck-Greifelementen auch andere Transportelemente für die Pucks im Hebe-Absenk-Stern aufweisen. Beispielsweise können die Transportelemente auch Aufnahmen umfassen, in die die Pucks hineingestellt werden und die die Pucks beispielsweise von unten und seitlich stützen oder, beispielsweise durch Formschluss, halten.

Die erste Kurvenführung und die zweite Kurvenführung können derart ausgebildet sein, dass bei einem Umlauf um den Umfang des Hebe-Absenk-Sterns die Pucks und die Behälter in einem ersten Bereich aufeinander zu und in einem zweiten Bereich voneinander weg bewegt werden. In diesem Fall kann der Hebe-Absenk-Stern für den Einlauf oder den Auslauf oder für den Einlauf und den Auslauf einer Behandlungsmaschine verwendbar sein. Insbesondere können Pucks und Behälter in dem ersten Bereich um den gleichen Betrag aufeinander zu bewegt werden, wie sie im zweiten Bereich voneinander weg bewegt werden. Insbesondere können die Pucks jeweils um den gleichen Betrag angehoben und abgesenkt werden und die Behälter können jeweils um den gleichen Betrag angehoben und abgesenkt werden.

In den oben genannten Ausführungen mit einer ersten und einer zweiten Kurvenführung können der Verlauf der ersten Kurvenführung und der Verlauf der zweiten Kurvenführung gegenläufig sein. Das heißt, dass, wenn die erste Kurvenführung nach oben verläuft, die zweite Kurvenführung nach unten verläuft bzw., wenn die erste Kurvenführung nach unten verläuft, die zweite Kurvenführung nach oben verläuft. Die Begriffe "unten" und "oben" beziehen sich jeweils auf eine Anordnung des Hebe-Absenk-Sterns für den bestimmungsgemäßen Gebrauch.

Der Verlauf der ersten Kurvenführung und der Verlauf der zweiten Kurvenführung können symmetrisch bezüglich einer Ebene, die senkrecht zu einer Drehachse des Hebe-Absenk-Sterns steht, sein. In diesem Fall wird insbesondere beim Umlaufen der Pucks und Behälter um die Drehachse des Hebe-Absenk-Sterns auf jeder durchlaufenen Teilstrecke ein Puck jeweils um den gleichen Betrag angehoben, um den der zugehörige Behälter abgesenkt wird bzw., der Puck jeweils um den gleichen Betrag abgesenkt, um den der zugehörige Behälter angehoben wird.

Die Transportvorrichtung kann einen Einlaufstern und einen Auslaufstern umfassen, wobei der Hebe-Absenk-Stern zur Übergabe von Behältern an den Einlaufstern und zur Übernahme von Behältern von dem Auslaufstern ausgebildet und angeordnet ist. Das heißt, dem Einlaufstern und dem Auslaufstern kann ein gemeinsamer Hebe-Absenk-Stern zugeordnet sein. Dies ist besonders platzsparend und erfordert lediglich die Anschaffung eines Hebe-Absenk-Sterns. Der Hebe-Absenk-Stern kann dann zum Entnehmen der Behälter aus den Pucks und zum Einsetzen der Behälter in die Pucks ausgebildet sein.

Alternativ kann die Transportvorrichtung mindestens einen ersten und einen zweiten Hebe-Absenk-Stern, einen Einlaufstern und einen Auslaufstern umfassen, wobei der erste Hebe-Absenk-Stern zur Übergabe von Behältern an den Einlaufstern ausgebildet und angeordnet ist und der zweite Hebe-Absenk-Stern zur Übernahme von Behältern von dem Auslaufstern ausgebildet und angeordnet ist. Das heißt, dem Einlaufstern und dem Auslaufstern kann jeweils ein eigener Hebe-Absenk-Stern zugeordnet sein. Der erste Hebe-Absenk-Stern kann dann zum Entnehmen der Behälter aus den Pucks ausgebildet sein und der zweite Hebe-Absenk-Stern kann zum Einsetzen der Behälter in die Pucks ausgebildet sein.

Dass dem Einlaufstern und dem Auslaufstern je ein eigener Hebe-Absenk-Stern zugeordnet ist, ermöglicht erhöhte Flexibilität bezüglich der Anordnung und Ausgestaltung des Einlaufsterns und des Auslaufsterns gegenüber der Ausführung mit einem gemeinsamen Hebe-Absenk-Stern. Ein wie oben beschriebener Hebe-Absenk-Stern kann derart ausgebildet und angeordnet sein, dass er unmittelbar mit der oben genannten Behälterbehandlungsmaschine wechselwirkt. Das heißt, der Hebe-Absenk-Stern kann Behälter direkt an die Behälterbehandlungsmaschine übergeben oder von dieser übernehmen. Der Hebe-Absenk-Stern fungiert dann als Einlaufstern bzw. als Auslaufstern. Die Transportvorrichtung kann auch zwei der oben beschriebenen Hebe-Absenk-Sterne umfassen, wobei einer der Hebe-Absenk-Sterne als Einlaufstern und einer der Hebe-Absenk-Stern als Auslaufstern fungiert.

Der Einlaufstern ist ein Stern, der Behälter an die Behandlungsmaschine übergibt, und der Auslaufstern ist ein Stern, der Behälter von der Behandlungsmaschine übernimmt, nachdem diese eine Behandlungsstrecke der Behandlungsmaschine durchlaufen haben. In dem Einlaufstern und dem Auslaufstern werden Behälter insbesondere hängend transportiert.

Ein mögliches Verfahren zum Transportieren von Pucks und Behältern beispielsweise mit einer der oben genannten Vorrichtungen umfasst, dass Behälter jeweils in einem Puck stehend transportiert werden und, beispielsweise im Einlauf einer Behandlungsmaschine, aus den Pucks entnommen werden und/oder, beispielsweise im Auslauf einer Behandlungsmaschine, in die Pucks eingesetzt werden. Wenn das Verfahren das Entnehmen der Behälter aus den Pucks umfasst, werden dazu mittels eines Hebe-Absenk-Sterns der zu entnehmende Behälter und der diesem Behälter zugeordnete Puck in entgegengesetzte Richtung auseinander bewegt. Wenn das Verfahren das Einsetzen der Behälter in die Pucks umfasst, werden dazu mittels des Hebe-Absenk-Sterns der einzusetzende Behälter und der diesem Behälter zugeordnete Puck aufeinander zu bewegt.

Insbesondere kann zum Entnehmen eines Behälters der Behälter angehoben und der ihm zugeordnete Puck abgesenkt werden. Zum Einsetzen eines Behälters kann der Behälter abgesenkt und der ihm zugeordnete Puck angehoben werden.

Es versteht sich, dass die im Zusammenhang mit der Vorrichtung genannten Merkmale und Vorteile ebenso auf das Verfahren anwendbar sind.

Weitere Merkmale und Vorteile werden nachfolgend anhand der beispielhaften Figuren erläutert. Dabei zeigen:
Figur 1 eine schematische, nicht maßstabsgetreue Seitenansicht einer Transportvorrichtung gemäß einer ersten Ausführungsform;
Figur 2 eine schematische, nicht maßstabsgetreue Schrägansicht der Transportvorrichtung gemäß der ersten Ausführungsform;
Figur 3 eine schematische, nicht maßstabsgetreue Schrägansicht eines Teils der Transportvorrichtung gemäß der ersten Ausführungsform;
Figur 4a eine schematische, nicht maßstabsgetreue Draufsicht auf eine Transportvorrichtung gemäß einer zweiten Ausführungsform; und
Figur 4b eine schematische, nicht maßstabsgetreue Draufsicht auf eine Transportvorrichtung gemäß einer dritten Ausführungsform.

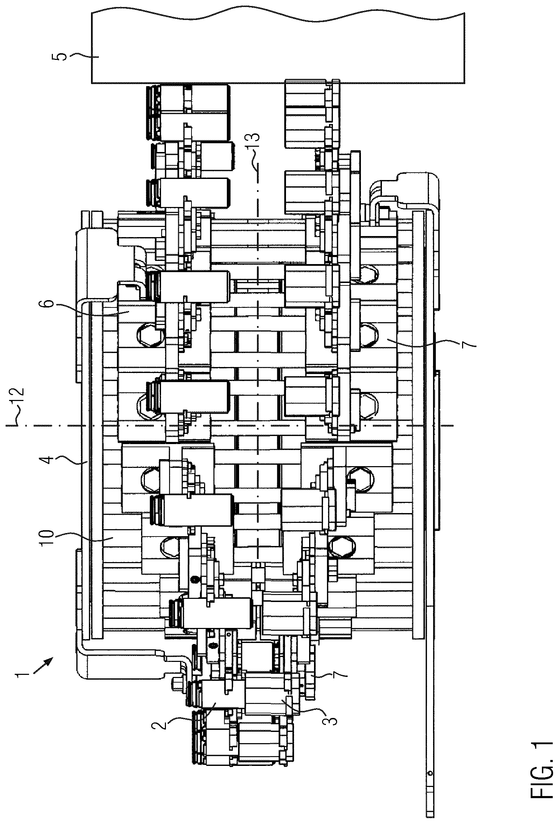

Figuren 1 bis 3 zeigen in verschiedenen Ansichten schematisch eine Transportvorrichtung 1 gemäß der ersten Ausführungsform zum Transportieren von Behältern 2 mit einer Mehrzahl von Pucks 3 zum Aufnehmen und stehenden Transport je eines Behälters.

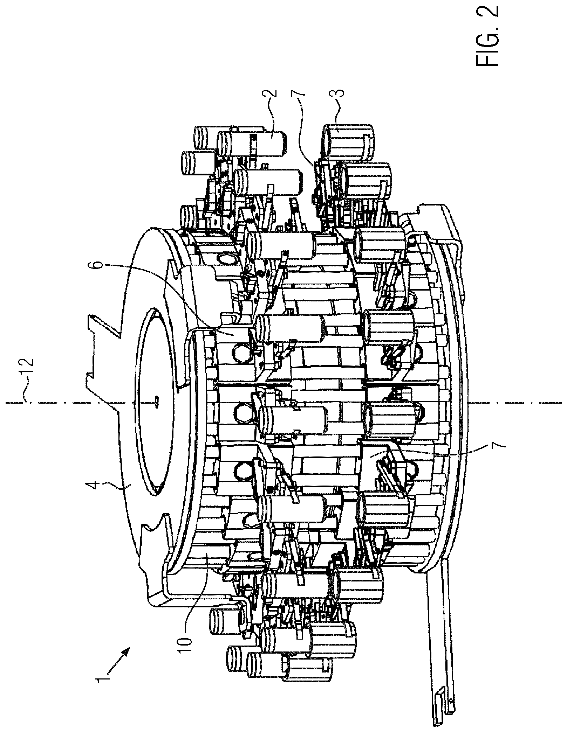

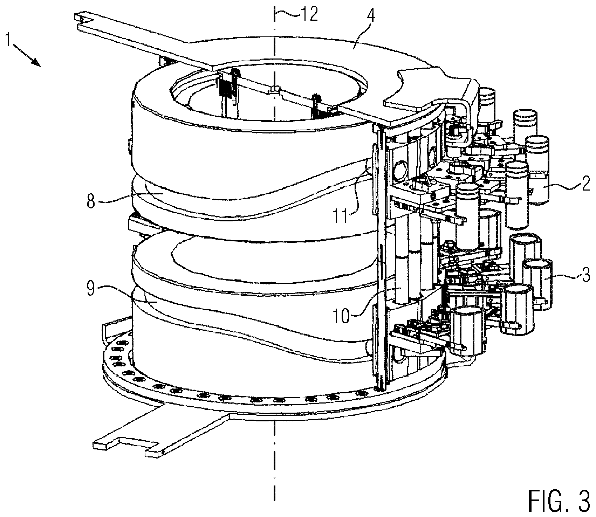

Dabei zeigen Figuren 1 und 2 jeweils eine Seitenansicht bzw. eine Schrägansicht der Transportvorrichtung. Figur 3 zeigt eine Schrägansicht, in der einige Elemente weggelassen wurden, so dass auch Elemente, die in Figuren 1 und 2 verdeckt sind, sichtbar sind.

Die Pucks sind in diesem Beispiel jeweils als Werkstückträger mit einer Behälteraufnahme derart ausgebildet, dass der untere Teil der Behälter in der Behälteraufnahme steht und durch die Wände der Behälteraufnahme seitlich gestützt wird. In den Pucks sind hier beispielhaft Behälter in Form von Flaschen dargestellt, wobei die Pucks auch zum Transportieren anderer Behälter ausgebildet sein können.

Die Transportvorrichtung umfasst mindestens einen Hebe-Absenk-Stern 4, der derart ausgebildet ist, dass zum Entnehmen der Behälter aus den Pucks je ein Behälter und der dem Behälter zugeordnete Puck auseinander bewegt werden, und/oder dass zum Einsetzen der Behälter in die Pucks je ein Behälter und der dem Behälter zugeordnete Puck aufeinander zu bewegt werden. Dazu kann der Hebe-Absenk-Stern insbesondere zum Verstellen der vertikalen Position der Behälter und der Pucks ausgebildet sein.

Ob der Hebe-Absenk-Stern zum Entnehmen oder Einsetzen oder für beides verwendbar ist, hängt von seiner Ausgestaltung und Anordnung ab. So kann zum Beispiel ein Hebe-Absenk-Stern zum Entnehmen der Behälter aus den Pucks im Einlauf einer Behandlungsmaschine 5 (die nicht Teil der Transportvorrichtung ist) angeordnet und derart ausgebildet sein, dass er im Betrieb die Behälter anhebt und zugleich die Pucks absenkt. Ein Hebe-Absenk-Stern zum Einsetzen der Behälter in die Pucks kann insbesondere im Auslauf einer Behandlungsmaschine angeordnet und derart ausgebildet sein, dass er Behälter absenkt und zugleich die Pucks anhebt. Der Hebe-Absenk-Stern kann auch in einem Bereich, der den Einlauf und den Auslauf umfasst, angeordnet sein und im Betrieb Behälter sowohl aus Pucks entnehmen als auch in Pucks einsetzen.

Der Hebe-Absenk-Stern umfasst hier Behälter-Greifelemente 6 und Puck-Greifelemente 7. Außerdem umfasst der Hebe-Absenk-Stern eine erste Kurvenführung 8 und eine zweite Kurvenführung 9. Die erste Kurvenführung ist derart ausgebildet, dass sie im Betrieb die um die Drehachse des Hebe-Absenk-Sterns umlaufenden Behälter-Greifelemente 6 lenkt bzw. die Form der Umlaufbahn vorgibt und die zweite Kurvenführung ist derart ausgebildet, dass sie im Betrieb die um die Drehachse des Hebe-Absenk-Sterns umlaufenden Puck-Greifelemente lenkt bzw. die Form der Umlaufbahn vorgibt.

Die erste Kurvenführung kann derart ausgebildet sein, dass die Behälter-Greifelemente zum Entnehmen der Behälter aus den Pucks nach dem Greifen der Behälter angehoben werden, und die zweite Kurvenführung kann derart ausgebildet sein, dass die Pucks, insbesondere die Puck-Greifelemente, zum Entnehmen der Behälter aus den Pucks nach dem Greifen der Behälter abgesenkt werden. Alternativ oder zusätzlich kann die erste Kurvenführung derart ausgebildet sein, dass die Behälter-Greifelemente zum Einsetzen der Behälter in die Pucks nach dem Greifen der Behälter abgesenkt werden, und die zweite Kurvenführung kann derart ausgebildet sein, dass die Pucks, insbesondere die Puck-Greifelemente, zum Einsetzen der Behälter in die Pucks nach dem Greifen der Behälter angehoben werden.

Die Kurvenführung kann beispielsweise, wie in Figur 3 gezeigt, als in einer Zylinderfläche ausgebildete Nut oder alternativ beispielsweise in Form einer Schiene oder Stange ausgebildet sein. Die Art der Kurvenführung kann im Prinzip beliebig gewählt werden, solange sie zum Lenken bzw. Vorgeben der Umlaufbahn der umlaufenden Behälter und Pucks geeignet ist.

In den Figuren ist ersichtlich, dass der Verlauf der ersten Kurvenführung und der zweiten Kurvenführung gegenläufig sind. Das heißt, dass die Kurvenführungen derart ausgebildet sind, dass sie im Betrieb die Behälter-Greifelemente und die Puck-Greifelemente gleichzeitig in entgegengesetzte Richtungen lenken. In dem gezeigten ersten Abschnitt des Hebe-Absenk-Sterns werden beispielsweise die Puck-Greifelemente nach unten und gleichzeitig die Behälter-Greifelemente nach oben gelenkt. Das heißt, es werden gleichzeitig die Pucks abgesenkt und die Behälter angehoben. In dem zweiten, aufgrund der Perspektive in der Figur nicht sichtbaren Abschnitt des Hebe-Absenk-Sterns werden im Betrieb die Puck-Greifelemente nach oben und die Behälter-Greifelemente gleichzeitig nach unten gelenkt. Das heißt, es werden gleichzeitig die Pucks angehoben und die Behälter abgesenkt. Im Betrieb können durch diese Anordnung im ersten Abschnitt Behälter aus den Pucks entnommen und/oder im zweiten Abschnitt Behälter in die Pucks eingesetzt werden.

Wie man den Figuren, insbesondere Figur 1 entnehmen kann, kann der Verlauf der ersten Kurvenführung bezüglich einer Ebene 13, die senkrecht zu der Drehachse 12 des Hebe-Absenk-Sterns steht, zumindest teilweise symmetrisch zu dem Verlauf der zweiten Kurvenführung sein, insbesondere in dem Bereich, in dem das Entnehmen bzw. Einsetzen erfolgt. Das heißt, dass gleichzeitig die Behälter-Greifelemente abgesenkt und die Puck-Greifelemente angehoben werden bzw. die Behälter-Greifelemente angehoben und die Puck-Greifelemente abgesenkt werden, und zwar jeweils um den gleichen Betrag. Dies ist allerdings optional. Insbesondere können das Anheben und Absenken versetzt und/oder um unterschiedliche Beträge erfolgen, solange zum Entnehmen der Behälter bzw. zum Einsetzen der Behälter jeweils sowohl das Absenken als auch das Anheben erfolgen.

In der ersten Ausführungsform umfasst der Hebe-Absenk-Stern umfänglich angeordnete und im Betrieb um die Drehachse des Hebe-Absenk-Sterns rotierende vertikale Stangen 10. Die Behälter-Greifelemente und Puck-Greifelemente sind jeweils an mindestens einer, in dem hier gezeigten Beispiel an zwei, der Stangen in vertikaler Richtung verschiebbar angebracht, derart, dass das jeweilige Greifelement, wenn die Stange im Betrieb um die Drehachse des Hebe-Absenk-Sterns rotiert, von der Stange so mitgenommen wird, dass es um die Drehachse des Hebe-Absenk-Sterns umläuft. Insbesondere verlaufen hier beispielhaft die vertikalen Stangen durch Aussparungen in den jeweiligen Greifelementen, wobei in den Aussparungen insbesondere auch Lager, beispielsweise Gleitlager, vorgesehen sein können. Dabei können ein Behälter-Greifelement und ein zugehöriges Puck-Greifelement insbesondere an der bzw. den selben vertikalen Stangen angeordnet sein. Dies ermöglich eine besonders präzise relative Ausrichtung von Puck-Greifelement und Behälter-Greifelement.

Wie in Figur 3 dargestellt, umfassen in dieser Ausführungsform die Behälter-Greifelemente und die Puck-Greifelemente jeweils Fortsätze 11, die Richtung Drehachse 12 weisen und die in die jeweilige Kurvenführung eingreifen. Insbesondere können die Fortsätze Rollen umfassen, die in der Kurvenführung, in diesem Beispiel also in der Nut, laufen.

Die Pucks können außerhalb des Hebe-Absenk-Sterns beispielsweise mittels eines oder mehrerer unterhalb der Pucks angeordneten Transportbändern (hier nicht gezeigt) zum Fördern der Pucks transportiert werden, beispielsweise durch Mitziehen der Pucks. Das bzw. die Transportbänder verlaufen typischerweise horizontal, das heißt, sie werden nicht mit den Pucks angehoben oder abgesenkt. Um den Transport der Pucks außerhalb des Hebe-Absenk-Sterns auf verschiedenen Ebenen umzusetzen, können die Pucks nach dem Transport durch den Hebe-Absenk-Stern mittels eines anderen Transportbandes als vorher oder weiter mittels Sterntransport (im Hebe-Absenk-Stern und/oder dem Auslaufstern) transportiert werden. Alternativ zu Transportbändern können beispielweise auch eine oder mehrere Förderketten oder andere Förderelemente vorgesehen sein.

Die in Figur 1 gezeigte Behandlungsmaschine 5, die nicht Teil der Transportvorrichtung ist, ist zum hängenden Transport der Behälter ausgebildet. Sie ist insbesondere derart ausgebildet und angeordnet, dass sie im Betrieb die aus den Pucks gehobenen Behälter, insbesondere von einem Einlaufstern oder, wie in Figur 1 dargestellt, direkt von den Behälter-Greifelementen, übernimmt und/oder die Behälter nach Durchlaufen einer Behandlungsstrecke, insbesondere an einen Auslaufstern oder direkt an die Behälter-Greifelemente, übergibt. Bei der Behandlungsmaschine kann es sich um einen Rundläufer handeln. Die Behandlungsmaschine kann beispielsweise eine Direktdruckmaschine, ein Etikettierer oder eine Inspektionsmaschine sein. In der Behandlungsmaschine werden Behälter entlang einer Behandlungsstrecke transportiert und behandelt, also beispielsweise bedruckt, etikettiert oder inspiziert.

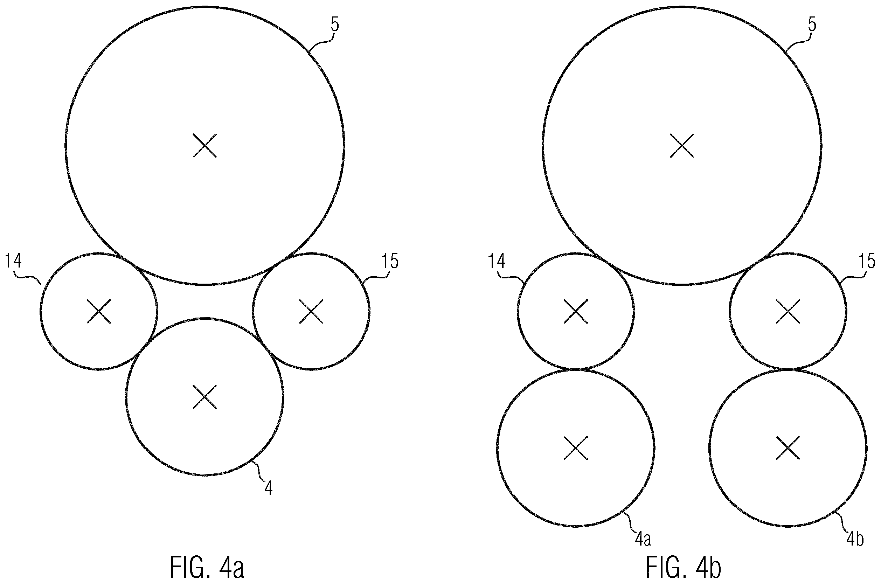

In den Figuren 4a und 4b sind eine zweite und eine dritte Ausführungsform der Transportvorrichtung jeweils in Draufsicht gezeigt.

In beiden Ausführungsformen umfasst die Transportvorrichtung einen Einlaufstern 14 und einen Auslaufstern 15. Außerdem ist in den Figuren jeweils die nicht zur Transportvorrichtung gehörende Behandlungsmaschine 5 gezeigt.

In der zweiten Ausführungsform, die in Figur 4a gezeigt ist, umfasst die Transportvorrichtung einen Hebe-Absenk-Stern 4, der derart ausgebildet ist, dass er im Betrieb sowohl mit dem Einlaufstern als auch mit dem Auslaufstern wechselwirken kann. Das heißt, der Hebe-Absenk-Stern ist derart ausgebildet und angeordnet, dass er im Betrieb Behälter aus den Pucks hebt und an den Einlaufstern übergibt und Behälter von dem Auslaufstern übernimmt und in Pucks einsetzt.

In der dritten Ausführungsform, die in Figur 4b gezeigt ist, umfasst die Transportvorrichtung einen ersten Hebe-Absenk-Stern 4a, der derart ausgebildet ist, dass er im Betrieb mit dem Einlaufstern wechselwirken kann. Der erste Hebe-Absenk-Stern 4a ist insbesondere derart ausgebildet und angeordnet, dass er im Betrieb Behälter aus den Pucks hebt und an den Einlaufstern übergibt. Die Transportvorrichtung umfasst außerdem einen zweiten Hebe-Absenk-Stern 4b, der derart ausgebildet ist, dass er im Betrieb mit dem Auslaufstern wechselwirken kann. Der zweite Hebe-Absenk-Stern 4b ist insbesondere derart ausgebildet und angeordnet, dass er im Betrieb Behälter von dem Auslaufstern übernimmt und in Pucks einsetzt.

Ein mögliches Verfahren zum Transportieren von Pucks und Behältern, beispielsweise mit einer der oben genannten Vorrichtungen, umfasst, dass Behälter jeweils in einem Puck stehend zu einer Behandlungsmaschine hin transportiert werden. Anschließend werden die Behälter, beispielsweise im Einlauf der Behandlungsmaschine, aus den Pucks entnommen. Die Behälter werden dann an die Behandlungsmaschine übergeben und darin bearbeitet. Anschließend werden die Pucks, beispielsweise im Auslauf einer Behandlungsmaschine, wieder in Pucks eingesetzt. Das Verfahren kann auch nur das Entnehmen der Behälter oder nur das Einsetzen der Behälter umfassen.

Wenn das Verfahren das Einsetzen und das Entnehmen der Behälter umfasst, kann dies mittels genau eines gemeinsamen Hebe-Absenk-Sterns oder mittels je eines Hebe-Absenk-Sterns zum Einsetzen und eines Hebe-Absenk-Sterns zum Entnehmen erfolgen.

Wenn das Verfahren das Entnehmen der Behälter aus den Pucks umfasst, werden dazu mittels eines Hebe-Absenk-Sterns der zu entnehmende Behälter und der diesem Behälter zugeordnete Puck in entgegengesetzte Richtung auseinander bewegt.

Wenn das Verfahren das Einsetzen der Behälter in die Pucks umfasst, werden dazu mittels des Hebe-Absenk-Sterns oder eines zusätzlichen Hebe-Absenk-Sterns der einzusetzende Behälter und der diesem Behälter zugeordnete Puck aufeinander zu bewegt.

Insbesondere kann zum Entnehmen eines Behälters der Behälter angehoben und der ihm zugeordnete Puck abgesenkt werden. Zum Einsetzen eines Behälters kann der Behälter abgesenkt und der ihm zugeordnete Puck angehoben werden.

Es versteht sich, dass allgemein die oben beschriebenen bzw. in den Figuren dargestellten Merkmale nicht auf diese speziellen Kombinationen beschränkt sind und auch in beliebigen anderen Kombinationen möglich sind.

## Patentansprüche

1. Transportvorrichtung (1) zum Transportieren von Behältern (2) mit einer Mehrzahl von Pucks (3), die jeweils zum Aufnehmen und stehenden Transport eines Behälters (2) ausgebildet sind,
**dadurch gekennzeichnet, dass**
die Transportvorrichtung (1) mindestens einen Hebe-Absenk-Stern (4) umfasst, der derart ausgebildet ist, dass zum Entnehmen der Behälter (2) aus den Pucks (3) je ein Behälter (2) und der dem Behälter (2) zugeordnete Puck (3) auseinander bewegt werden, und/oder dass zum Einsetzen der Behälter (2) in die Pucks (3) je ein Behälter (2) und der dem Behälter (2) zugeordnete Puck (3) aufeinander zu bewegt werden.

2. Transportvorrichtung (1) nach Anspruch 1, wobei der Hebe-Absenk-Stern (4) zum Verstellen der vertikalen Position der Behälter (2) und der Pucks (3) ausgebildet ist.

3. Transportvorrichtung (1) nach Anspruch 1 oder 2, wobei der Hebe-Absenk-Stern (4) zum Entnehmen der Behälter (2) aus den Pucks (3) derart ausgebildet ist, dass er die Behälter (2) anhebt und zugleich die Pucks (3) absenkt.

4. Transportvorrichtung (1) nach einem der vorangegangenen Ansprüche, wobei der Hebe-Absenk-Stern (4) zum Einsetzen der Behälter (2) in die Pucks (3) derart ausgebildet ist, dass er die Behälter (2) absenkt und zugleich die Pucks (3) anhebt.

5. Transportvorrichtung (1) nach einem der vorangegangenen Ansprüche,
wobei der Hebe-Absenk-Stern (4) Behälter-Greifelemente (6) zum Greifen jeweils eines Behälters (2), eine erste Kurvenführung (8) und eine zweite Kurvenführung (9) umfasst,
wobei die erste Kurvenführung (8) derart ausgebildet ist, dass die Behälter-Greifelemente (6) zum Entnehmen der Behälter (2) aus den Pucks (3) nach dem Greifen der Behälter (2) angehoben werden, und
wobei die zweite Kurvenführung (9) derart ausgebildet ist, dass die Pucks (3) zum Entnehmen der Behälter (2) aus den Pucks (3) nach dem Greifen der Behälter (2) abgesenkt werden, insbesondere mittels Puck-Greifelementen (7).

6. Transportvorrichtung (1) nach Anspruch 5, wobei die erste Kurvenführung (8) und die zweite Kurvenführung (9) derart ausgebildet sind, dass zum Entnehmen der Behälter (2) aus den Pucks (3) gleichzeitig die Behälter (2) angehoben und die Pucks (3) abgesenkt werden.

7. Transportvorrichtung (1) nach einem der vorangegangenen Ansprüche,
wobei der Hebe-Absenk-Stern (4) Behälter-Greifelemente (6) zum Greifen jeweils eines Behälters (2), eine bzw. die erste Kurvenführung und eine bzw. die zweite Kurvenführung umfasst,
wobei die erste Kurvenführung (8) derart ausgebildet ist, dass die Behälter-Greifelemente (6) zum Einsetzen der Behälter (2) in die Pucks (3) nach dem Greifen der Behälter (2) abgesenkt werden, und
wobei die zweite Kurvenführung (9) derart ausgebildet ist, dass die Pucks (3) zum Einsetzen der Behälter (2) in die Pucks (3) nach dem Greifen der Behälter (2) angehoben werden, insbesondere mittels Puck-Greifelementen (7).

8. Transportvorrichtung (1) nach Anspruch 7, wobei die erste Kurvenführung (8) und die zweite Kurvenführung (9) derart ausgebildet sind, dass zum Einsetzen der Behälter (2) in die Pucks (3) gleichzeitig die Behälter (2) abgesenkt und die Pucks (3) angehoben werden.

9. Transportvorrichtung (1) nach einem der Ansprüche 5 bis 8, wobei der Verlauf der ersten Kurvenführung (8) und der Verlauf der zweiten Kurvenführung (9) gegenläufig sind.

10. Transportvorrichtung (1) nach einem der Ansprüche 5 bis 9, wobei der Verlauf der ersten Kurvenführung (8) und der Verlauf der zweiten Kurvenführung (9) symmetrisch bezüglich einer Ebene (13), die senkrecht zu einer Drehachse (12) des Hebe-Absenk-Sterns steht, sind.

11. Transportvorrichtung (1) nach einem der vorangegangenen Ansprüche, wobei die Transportvorrichtung (1) einen Einlaufstern (14) und einen Auslaufstern (15) umfasst, wobei der Hebe-Absenk-Stern (4) zur Übergabe von Behältern (2) an den Einlaufstern (14) und zur Übernahme von Behältern (2) von dem Auslaufstern (15) ausgebildet und angeordnet ist.

12. Transportvorrichtung (1) nach Anspruch 11, wobei der Hebe-Absenk-Stern (4) zum Entnehmen der Behälter (2) aus den Pucks (3) und zum Einsetzen der Behälter (2) in die Pucks (3) ausgebildet ist.

13. Transportvorrichtung (1) nach einem der Ansprüche 1 bis 10, wobei die Transportvorrichtung (1) mindestens einen ersten und einen zweiten Hebe-Absenk-Stern (4a, 4b), einen Einlaufstern (14) und einen Auslaufstern (15) umfasst, wobei der erste Hebe-Absenk-Stern (4a) zur Übergabe von Behältern (2) an den Einlaufstern (14) ausgebildet und angeordnet ist und der zweite Hebe-Absenk-Stern (4b) zur Übernahme von Behältern (2) von dem Auslaufstern (15) ausgebildet und angeordnet ist.

14. Transportvorrichtung (1) nach Anspruch 13, wobei der erste Hebe-Absenk-Stern (4a) zum Entnehmen der Behälter (2) aus den Pucks (3) ausgebildet ist und der zweite Hebe-Absenk-Stern (4b) zum Einsetzen der Behälter (2) in die Pucks (3) ausgebildet ist.

15. Verfahren zum Transportieren von Pucks (3) und Behältern (2), insbesondere mittels der Transportvorrichtung (1) nach einem der vorangegangenen Ansprüche, wobei das Verfahren umfasst, dass Behälter (2) jeweils in einem Puck (3) stehend transportiert werden und, beispielsweise im Einlauf einer Behandlungsmaschine, aus den Pucks (3) entnommen werden und/oder, beispielsweise im Auslauf einer Behandlungsmaschine, in die Pucks (3) eingesetzt werden,
wobei das Entnehmen der Behälter (2) aus den Pucks (3) umfasst, mittels eines Hebe-Absenk-Sterns (4) den zu entnehmenden Behälter (2) und den diesem Behälter (2) zugeordneten Puck (3) in entgegengesetzte Richtung auseinander zu bewegen und/oder wobei das Einsetzen der Behälter (2) in die Pucks (3) umfasst, mittels eines bzw. des Hebe-Absenk-Sterns (4) den einzusetzenden Behälter (2) und den diesem Behälter (3) zugeordnete Puck aufeinander zu zu bewegen.
